Europäisches Patentamt

European Patent Office

Office européen des brevets

(19)

(11) Publication number: **0 063 451**

A1

(12) **EUROPEAN PATENT APPLICATION**

(21) Application number: **82301845.2**

(22) Date of filing: **07.04.82**

(51) Int. Cl.³: **H 01 M 10/48**
G 01 N 9/24, G 01 R 31/36

(30) Priority: **14.04.81 AU 8486/81**

(43) Date of publication of application:
**27.10.82 Bulletin 82/43**

(84) Designated Contracting States:
**DE FR GB IT NL SE**

(71) Applicant: **Jackson, Terry Roy**
**20 Sudbury Way**
**City Beach Western Australia(AU)**

(72) Inventor: **Jackson, Terry Roy**
**20 Sudbury Way**
**City Beach Western Australia(AU)**

(74) Representative: **Matthews, Howard Nicholas et al,**
**MATTHEWS HADDAN & CO HADDAN HOUSE 33**
**Elmfield Road**
**Bromley Kent BR1 1SU(GB)**

(54) Device for sensing the density of liquids.

(57) A device for sensing the density of liquid comprising a housing (10) to be immersed in the liquid and having a radioactive source material (13) therein in opposed relation to a radiation detector (14) which a chamber (15) separating the source (13) and detector (14) which is in fluid communication with the exterior of the housing (10); a counter circuit and an output for providing a measure of the density of the electrolyte.

fig. 1.

EP 0 063 451 A1

THIS INVENTION relates to a means for measuring the density of liquids.

One particular use of the invention relates to the measurement of the density of the electrolyte in electrolytic storage cells.

Storage batteries are currently used for stand-by power and as a principal power source in many applications including vehicles. In each of these situations, it is essential that the user has a means of determining the state of charge of the batteries. An indication of the state of charge for a battery is in effect an indication of the amount of "fuel" available to the user. Previous methods of indicating the state of charge have been to measure the loaded circuit voltage between the terminals of the battery, however such an indication does not take into consideration the age of the battery, the previous history of use of the battery or the current load charcteristics with which the battery is being used. Another method of indicating the state of charge of a battery has been use of a hydrometer to measure the density or specific gravity of the electrolyte. However, such a method is intermittent and if adapted to provide a continuous output by means of a suitable transducer, suffers from the difficulties of variation in the electrolyte level with use of the battery and movement of the electrolyte if the station with which the battery is used is moving (eg; a vehicle).

It is an object of this invention to provide a means of measuring the density of liquids which can provide a constant output if desired.

In one form the invention resides in a device for sensing the density of liquid comprising; a housing to be immersed in the liquid and having a radioactive source mounted in opposed relation to a radiation detector with a chamber separating the source and detector which is in fluid communication with the exterior of the housing; a counter circuit having an output for providing a measure of the density of the electrolyte.

According to a preferred feature of the invention the housing is formed of a substantially inert material wherein the source is encased in a first portion and the detector is encased in a second portion said portions being maintained in spaced relation to each other by an annular portion which surrounds the space between the source and detector, said annular portion being formed with apertures therein to permit fluid flow through said space.

According to a further preferred feature of the invention the housing is slidably received in a closure for an electrolytic storage cell and is formed on its external surface with engagement means engagable with the closure wherein on such engagement the fluid path is located below the normal surface level of the electrolyte.

According to a further feature of the invention the external configuration of the housing takes the form of a closure for an electrolytic storage cell and wherein when in position to close the cell the fluid path is located below the normal surface level of the electrolyte.

The invention will be more fully understood in the light of the following description of several specific embodiments. The description is made with reference to the accompanying drawings of which;

Figure 1 is a schematic sectional elevation of the first embodiment; and
Figure 2 is an elevation of the second embodiment.

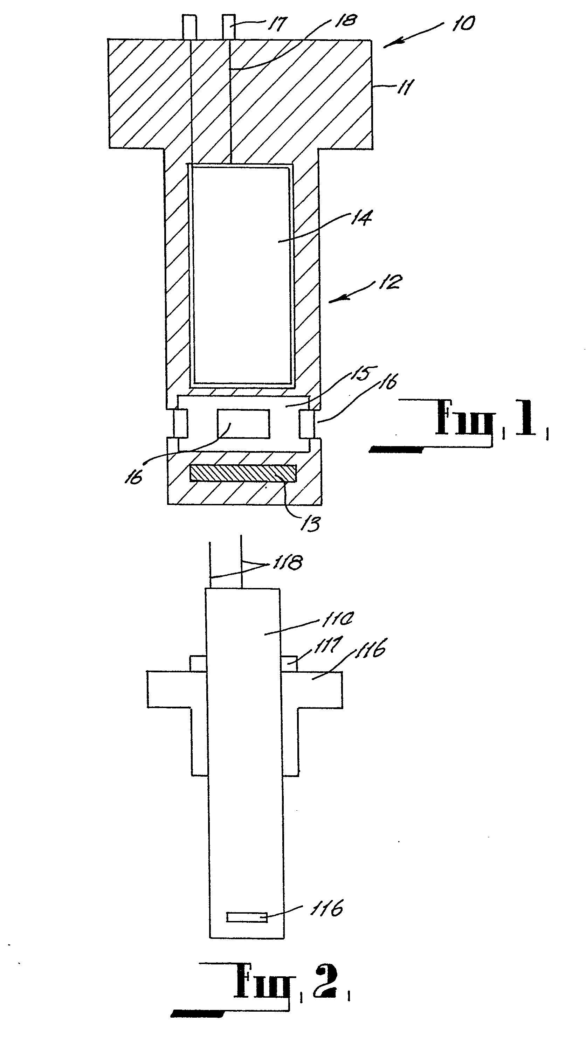

The embodiment is directed towards a means of measuring the state of charge of a storage cell such as a lead-acid cell in which the electrolyte undergoes a variation in density as the cell discharges and the variation in density is proportional to the variation in the state of charge of the cell. The embodiment comprises a housing 10 formed of polypropylene or similar plastic having a similar configuration to a conventional battery closure which is used to close the filling aperture provided in the top of the cell. The housing 10 comprises a finger grip portion 11 which is intended to remain exposed above the top of the battery and a downwardly depending portion 12 which houses the radioisotope and detector. The radioisotope is embedded in a first portion at the lower end of the downwardly depending portion while the detector in the form of a Geiger Muller sensor is embedded in a second portion above the radioisotope. Between the first and second portion, a chamber 15 is formed by an annular wall which separates the portion and is formed with a set of apertures 16 which enables the electrolyte to flow through the chamber 15. Electrical terminals 17 are mounted at the top of the housing 10 and are connected to the sensor via leads 18. The length of the housing is such that when the embodiment is in position the chamber between the first and second portions lies below the normal surface level of the electrolyte. The source and detector are separated from the chamber 15 by a thin layer of the material of which the housing is formed, to provide a window to minimise the absorption of radiation between the source and detector by factors other than the electrolyte.

In use, the housing is inserted into the aperture in the top of the cell and the chamber 15 fills with electrolyte. The degree of absorption of the radiation from the source will vary in proportion to the density of the electrolyte to produce a differing count from the detector which can then be interpreted to provide an indication of the state of charge of the cell.

The accuracy of the measurement obtained using the embodiment depends upon the nature of the radiation emitted from the radioisotope, the spacing between the radioisotope and the detector, and time period over which a count is taken. It would appear that the most appropriate form of radiation for use the with embodiment comprises high energy beta particles having an energy similar to that available from a Strontium 90 source. Utilising such a source with a strength of 2 microcuries, a suitable spacing between the radioisotope and detector would be approximately 3.1mm when the electrolyte has a density of 1.3 grams per cubic cm. The time allowed to obtain a satisfactory count will depend upon the degree of accuracy required and the frequency within which a reading must be provided. Increasing the intensity of the source will also increase the accuracy. Where a bank of batteries are used to provide an output, it is preferable that at least one cell of each battery has a measuring device according to the embodiment mounted in it and that each measuring device be connected to an interpretive means to scans and a switching circuit which switches to each device, transmits the count therefrom to the interpretive circuit, resets the measurement device to a 0 count and then switches to the next measurement device. The interpretive circuit may provide an individual output for each detector. If desired, means may be located in the cell incorporating the embodiment which serves in preventing stratification of the electrolyte. Such a means may comprise an impeller or a means of bubbling air or gas through the cell.

Both embodiments also have the feature that on the level of the electrolyte falling below the chamber a low density measure will be produced which can be used to signal the need to check the electrolyte levels.

According to a further embodiment of the invention, the chamber may be located at a position remote from the storage cell and the electrolyte is circulated through the chamber to provide a measure of the specific gravity of the cell. Such an arrangement would also reduce the phenomenon of stratification of the electrolyte in the cell.

Since the relationship of the state of charge of a storage cell with the specific gravity of the electrolyte can vary with temperature a further embodiment utilises a means of measuring the temperature of the electrolyte or casing wall and may also incorporate a compensation means associated with the output of the measuring device to compensate for temperature variations. Alternatively a similar device may be located in the cell with a closed chamber between the source and detector containing a quantity of liquid of known density which is subjected to the same density changes as the electrolyte. By means of a suitable comparative circuit the variations in density of the electrolyte can be more accurately analysed.

Since the embodiments will also provide a measure of the state of charge of a cell when being recharged, the output may be used to control the current flow to a cell when under recharge to optimise the recharging of the cell.

It should be appreciated that the scope of the present invention need not be limited to the particular scope of the embodiment described above and in particular need not be restricted to the particular constructional details of the embodiment or the use of a particular radioisotope or detector. In particular the invention need not be limited to the measurement of the density of the electrolyte of an electrolytic cell but may be used to measure the density of any liquid.

CLAIMS:-

1.  A device for sensing the density of liquid comprising a housing to be immersed in the liquid and having a radioactive source mounted in opposed relation to a radiation detector with a chamber separating the source and detector which is in fluid communication with the exterior of the housing; and a counter circuit having an output for providing a measure of the density of the electrolyte.

2.  A device as claimed at claim 1 wherein the housing is formed of a substantially inert material and wherein the source is enclosed in a first portion and the detector is enclosed within a second portion, said portions being maintained in spaced relation by a third annular separating portion which define the chamber, said third portion being formed with apertures to permit fluid flow into and through said chamber.

3.  A device as claimed at claim 2 wherein the wall of the first portion separating the source from the chamber and the wall of the second portion separating the detector from the chamber are of reduced thickness from the remaining walls of the housing.

4.  A device as claimed at claim 2 or 3 wherein the housing is slidably received in a closure for an electrolytic cell utilising a liquid electrolyte and having an inspection opening in its wall closable by said closure, said housing being provided with engagement means which are engageable with the closure to limit slidable movement of the housing into the cell and wherein on such engagement the chamber is located below the normal surface level of the electrolyte.

5.  A device as claimed at claim 2 or 3 wherein the housing has the external configuration of a closure of an electrolytic cell utilising a liquid electrolyte and having an inspection opening in its wall closable by said closure wherein when in position to close the opening the chamber is located below the normal surface level of the electrolyte.

6. A device as claimed at claim 4 or 5 wherein the electrolytic cell has means therein for causing a flow of electrotye through the cell.

7. A device as claimed at claim 1, 2 or 3 wherein the chamber is located in a fluid path for said electrolyte exterior of the cell and means are provided for circulating electrolyte through said cell.

8. A means for sensing density variation in density of the electrolyte in an electrolytic cell wherein two devices of the form as claimed at any one of claims 1 to 7 are associated with the cell and wherein one chamber is closed and contains a liquid of known density while the chamber of the other device is in fluid communication with said electrolyte.

9. A means for determining the state of charge of a number of electrolytic storage cells utilising a liquid electrolyte said means comprising a plurality of devices of the form as claimed at any one of claims 1 to 8 each associated with a different cell of the number of cells and each device has its output connected to a suitable counting circuit and the output of the counting circuits are connected to a suitable interpretive circuit through a switching circuit which sequentially transmits the output of a counting circuit to the interpretive circuit; resets the count in the counting circuit to zero; and switches to another counting circuit.

0063451

Fig. 1.

Fig. 2.

European Patent Office

**EUROPEAN SEARCH REPORT**

EP 82 30 1845.2

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| X | DE - U - 1 684 027 (LABORATORIUM PROF. DR. BERTHOLD) <br> * claims 1, 2; page 2; fig. 1 to 3 * | 1-3 | H 01 M 10/48 <br> G 01 N 9/24 <br> G 01 R 31/36 |
| X <br> A | GB - A - 1 344 578 (ZINC CORP. LTD.) <br> * claims 1, 3, 7, 12; fig. 1, 4 * <br> * claim 1 * | 2 <br> 1 | |
| X | DE - A - 2 053 654 (ERNO RAUMFAHRT-TECHNIK GMBH) <br> * claims 1, 3, 5; page 2, fourth paragraph; fig. 1 * | 1,2 | TECHNICAL FIELDS SEARCHED (Int.Cl.3) |
| X | DE - A1 - 2 462 039 (VDO A. SCHINDLING AG) <br> * claims 1, 6,7 ; page 3, line 24 to page 4, line 10; fig. 1, 2 * | 5,8 | G 01 N 9/24 <br> G 01 N 23/00 <br> G 01 R 31/36 <br> H 01 M 10/48 |
| X <br> A | US - A - 3 246 145 (SOCONY MOBIL OIL CO.) <br> * claims 1, 3; fig. 3 * <br> * claim 1 * | 7 <br> 1,3 | CATEGORY OF CITED DOCUMENTS |

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| The present search report has been drawn up for all claims | | |
|---|---|---|
| Place of search <br> Berlin | Date of completion of the search <br> 07-07-1982 | Examiner <br> HOFMANN |

EPO Form 1503.1 08.78